# EUROPÄISCHE PATENTSCHRIFT

(11) **EP 0 897 102 B1**
(45) Veröffentlichungstag und Bekanntmachung des Hinweises auf die Patenterteilung: **27.06.2007**
(21) Anmeldenummer: 97114097.5
(22) Anmeldetag: 14.08.1997
(51) Int. Cl.: G01F 1/00, G01F 1/66

(54) **Ultraschall-Durchflussmesser**
Ultrasonic flowmeter
Débitmètre à ultrason

(43) Veröffentlichungstag der Anmeldung: 17.02.1999
(73) Patentinhaber: Landis+Gyr GmbH, 90459 Nürnberg (DE)
(72) Erfinder: Hauenstein, Günther, 63477 Maintal (DE)
(74) Vertreter: Bauerschmidt, Peter

(56) Entgegenhaltungen:
- EP-A- 0 088 235
- WO-A-86/02723
- CH-A- 670 156
- PATENT ABSTRACTS OF JAPAN vol. 009, no. 054 (P-340), 8.März 1985 & JP 59 190621 A (HONDA GIKEN KOGYO KK), 29.Oktober 1984,

## Beschreibung

Die Erfindung betrifft einen Ultraschall-Durchflussmesser der im Oberbegriff des Anspruchs 1 genannten Art.

Solche Durchflussmesser eignen sich zur Erfassung von Strömungsgeschwindigkeiten und darauf aufbauend zur Erfassung von Durchflussmengen und in Kombination mit Temperaturdifferenzmessungen zur Wärmeverbrauchserfassung und -verrechnung.

Aus der schweizerischen Patentschrift CH 670 156 ist ein Ultraschall-Durchflussmesser mit einem Messrohr bekannt, bei dem die Flüssigkeit über seitliche Zuleitungen zu- und weggeführt wird. Beidseitig des Messrohrs sind Ultraschallwandler angeordnet. Auf die Enden des Messrohrs sind trichterförmige Blenden aus Ultraschall absorbierendem Material aufgesteckt, die unerwünschte Reflexionen des Ultraschalls unterdrücken.

Aus der internationalen Patentanmeldung WO 86/02723 ist ein Ultraschall-Durchflussmesser mit einem rohrförmigen Gehäuse mit direkter Zuführung der Flüssigkeit, d.h. ohne seitliche Zuleitungen für die Flüssigkeit, bekannt. Die Endteile des Gehäuses sind aufgeweitet und mit Aussengewinden zum Einbau in ein Rohrsystem versehen. Die Ultraschallwandler sind auf der axialen Rohrachse zentriert angeordnet und mittels Wandlerträgern radial an den Endteilen befestigt. Ein separates Messrohr zwischen den Ultraschallwandlern ist nicht vorhanden. Zur Verkleinerung des Strömungswiderstandes und damit des Druckverlustes sind den Ultraschallwandlern Verdrängungskörper vorgelagert.

Der Erfindung liegt die Aufgabe zugrunde, einen Ultraschall-Durchflussmesser vorzuschlagen, der bereits bei kleinen Durchflussmengen eine grosse Dynamik und eine hohe Genauigkeit erreicht und dessen Druckverlust möglichst gering ist.

Die Erfindung besteht in den im Anspruch 1 angegebenen Merkmalen. Vorteilhafte Ausgestaltungen ergeben sich aus den abhängigen Ansprüchen.

Die Erfindung benützt ein rohrförmiges Gehäuse mit einem Einlassstutzen, einem Zwischenteil und einem Auslassstutzen, die vom Medium in annähernd gleicher Richtung durchströmt werden. Im Einlassstutzen und im Auslassstutzen ist je ein Ultraschallwandler angeordnet. Im Zwischenteil ist zwischen den beiden Ultraschallwandlern fakultativ ein Messrohr angeordnet, in dem zugleich die Ultraschallmessstrecke gebildet ist. Das Messrohr dient zur Erhöhung der Strömungsgeschwindigkeit. Sein Querschnitt ist so klein bemessen, dass bei einer vorgegebenen minimalen zu messenden Durchflussrate zwischen einem stromaufwärts und einem stromabwärts geschickten Ultraschallimpuls eine Laufzeitdifferenz resultiert, die mit einer vorgegebenen Genauigkeit messbar ist. Für die Ultraschallimpulse wirkt das Messrohr als Wellenleiter, wie es in der europäischen Patentschrift EP 451 355 beschrieben ist.

Um zu vermeiden, dass ein Teil des von einem Ultraschallwandler in der Sendephase abgestrahlten Ultraschallimpulses irgendwo am Gehäuse reflektiert werden und während der nachfolgenden Empfangsphase wieder auf den Ultraschallwandler auftreffen und sich dabei dem vom anderen Ultraschallwandler abgestrahlten Ultraschallimpuls überlagern, sind beim Übergang vom Einlass- bzw. Auslassstutzen zur Ultraschallmessstrecke, wo sich der Innendurchmesser ändert, die Innenflächen mit ultraschallabsorbierendem Material verkleidet. Aus strömungstechnischen Überlegungen wäre zu erwarten, dass der Übergang vom Einlass- bzw. Auslassstutzen auf das Messrohr zur Erziehlung eines möglichst geringen Druckverlustes möglichst stromlinienförmig, d.h. ohne Ecken und Kanten auszubilden ist. Gemäss der Erfindung ist es jedoch möglich, sprunghafte, d.h. nicht stromlinienförmige Änderungen des Innendurchmessers vorzunehmen, ohne dass dadurch der Druckverlust merklich vergrössert wird. Die Verkleidung der so entstehenden Stufen erfolgt dahingehend, dass der vom Ultraschallwandler abgestrahlte Ultraschall, der frontal auf die Verkleidung auftrifft und der nicht absorbiert wird, in eine Richtung reflektiert wird, die am Ultraschallwandler vorbeigeht.

Nachfolgend werden Ausführungsbeispiele der Erfindung anhand der Zeichnung näher erläutert.

Es zeigen:
- Fig. 1: einen Durchflussmesser mit einem Messrohr,
- Fig. 2: einen Verdrängungskörper mit einem Verkleidungsstück,
- Fig. 3: Details eines Durchflussmessers mit Messrohr, und
- Fig. 4: Details eines Durchflussmessers mit Messrohr und mit Spiegeln.

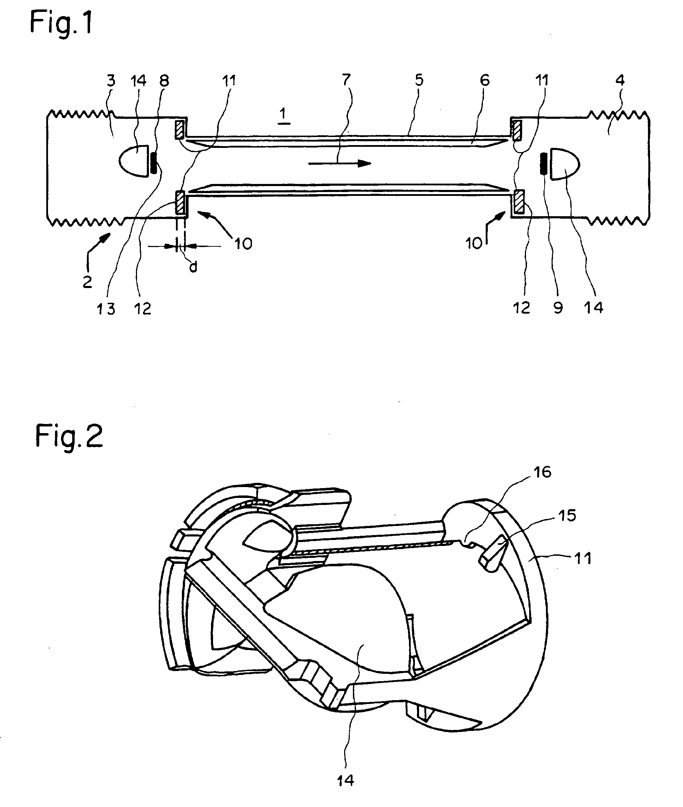

Die Fig. 1 zeigt im Längsschnitt einen Durchflussmesser 1 zur Bestimmung der Menge eines durch ein Rohrsystem strömenden Mediums wie beispielsweise Wasser, Öl oder Gas. Sein Gehäuse 2 weist einen Einlassstutzen 3 und einen Auslassstutzen 4 auf, die durch ein Zwischenteil 5 verbunden sind. Im Zwischenteil 5 ist, fakultativ, ein Messrohr 6 eingesetzt. Die Flüssigkeit durchströmt den Einlassstutzen 3, gegebenenfalls das Messrohr 6 bzw. das Zwischenteil 5 und den Auslassstutzen 4 in einer im wesentlichen gleichen, durch einen Pfeil dargestellten axialen Richtung 7. Der Einlassstutzen 3 und der Auslassstutzen 4 weisen ein Aussengewinde auf. Im Einlass- und im Auslassstutzen 3, 4 sind Ultraschallwandler 8 bzw. 9 angeordnet, die in und entgegen der Strömungsrichtung gerichtete Ultraschallimpulse abstrahlen. Im Zwischenteil 5 ist daher zwischen den beiden Ultraschallwandlern 8 und 9 eine Ultraschallmessstrecke gebildet. Die Ultraschallwandler 8 und 9 senden jeweils gleichzeitig einen aus mehreren Ultraschallwellenzügen bestehenden Ultraschallimpuls und empfangen anschliessend den vom anderen Ultraschallwandler 9 bzw. 8 gesendeten, die Ultraschallmessstrecke durcheilt habenden Ultraschallimpuls.

Der Innendurchmesser des Einlassstutzens 3 ist grösser als der Innendurchmesser des Zwischenteils 5 oder des Messrohres 6. Der Übergang vom Einlassstutzen 3 auf das Zwischenteil 5 bzw. das Messrohr 6 ist nun derart auszubilden, dass die von den Ultraschallwandlern 8 und 9 abgestrahlten Ultraschallimpulse die Ultraschallmessstrecke möglichst direkt durcheilen, d.h. ohne dass infolge von Reflexionen Störimpulse entstehen, die sich dem zu empfangenden Ultraschallimpuls unerwünschterweise überlagern. Beim Übergang vom Einlass- bzw. Auslassstutzen 3 bzw. 4 zur Ultraschallmessstrecke sind deshalb sprunghafte Änderungen des Innendurchmessers vorgesehen, die zudem mit ultraschallabsorbierendem Material verkleidet sind.

Der Übergang vom Einlassstutzen 3 auf das Zwischenteil 5 bzw. das Messrohr 6 ist also gemäss der Erfindung nicht stromlinienförmig ausgebildet, sondern mit einer Stufe 10. Einerseits weist das Gehäuse 2 eine Stufe 10 auf, andererseits ist diese Stufe 10 mit einem Körper 11 aus ultraschallabsorbierendem Material verkleidet, wobei der Körper 11 den stufenförmigen Übergang im wesentlichen erhält. Der Körper 11 weist demnach eine dem entsprechenden Ultraschallwandler 8 oder 9 zugewandte Fläche 12 auf, die etwa parallel zur Oberfläche 13 des Ultraschallwandlers und somit annähernd senkrecht zur axialen Richtung 7 ist. Als Material für den Körper 11 erweist sich PVDF (Polyvinylidenfluorid) als besonders vorteilhaft, da bei diesem Material eine Dicke d der Fläche 12 von etwa 1.5 mm bereits genügt, um die Reflexionen derart zu mindern, dass eine Erhöhung der Dicke d keine merkliche Verbesserung mehr bringt. Die Stufe 10 lässt sich aufeinfache Weise, beispielsweise durch Fräsen, im Gehäuse 2 anbringen.

Wenn der Ultraschallwandler 8 einen Ultraschallimpuls sendet, dann breiten sich im Medium Ultraschallwellen aus, wovon ein geringer Anteil auf den Körper 11 auftrifft. Die auf den Körper 11 auftreffenden Ultraschallwellen dringen teilweise in diesen ein, teilweise werden sie reflektiert. Die Energie der eingedrungenen Ultraschallwellen wird zu einem grossen Teil absorbiert. Die reflektierten Ultraschallwellen werden nun in eine Richtung reflektiert, die am Ultraschallwandler 8 vorbeigeht, da die reflektierten Ultraschallwellen an der Fläche 12 des Körpers 11 wie an einem Spiegel reflektiert werden.

Zur Minimierung des Druckabfalles sind die Ultraschallwandler 8 und 9 fakultativ mit einem Verdrängungskörper 14 verkleidet. Der Körper 11 und der Verdrängungskörper 14 sind mit Vorteil als ein einziges Teil gefertigt, wie es beispielhaft in der Fig. 2 in perspektivischer Darstellung gezeigt ist. Dieses Teil ist seitlich in den Einlass- oder Auslassstutzen 3 bzw. 4 (Fig. 1) einführbar, wobei es im Gehäuse 2 (Fig. 1) einschnappt und damit unverrückbar fixiert ist. Zwei vorstehende Nasen 15 gewährleisten die axiale Fixierung des Messrohres 6. Weitere Führungselemente 16 gewährleisten die radiale Lagerung des Messrohres 6.

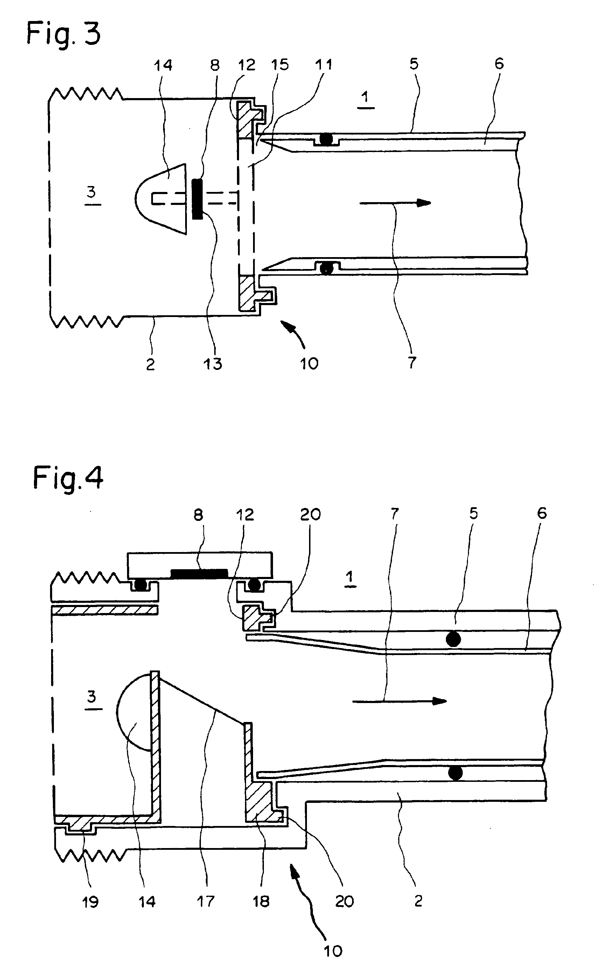

Die Fig. 3 zeigt im Detail wie der Körper 11 das Messrohr 6 axial lagern kann. Das Messrohr 6 weist entweder angeschrägte Enden auf (Fig. 3) oder ist gegen die Enden leicht aufgeweitet (Fig. 4). Mit Vorteil ist das Messrohr 6 durch einen O-Ring radial im Zwischenteil 5 abgedichtet. Der Körper 11 überdeckt die Stirnkante des Messrohres 6 mit Ausnahme der zwei schmalen Nasen 15 nicht. Fakultativ sind weitere Flächen im Einlass- und im Auslassstutzen 3 bzw. 4 mit ultraschallabsorbierendem Material verkleidet. Dem Vorteil der besseren Unterdrückung unerwünschter Ultraschallreflexionen steht der Nachteil gegenüber, dass die Verkleidung den wirksamen Querschnitt verkleinert, was zu einem höheren Druckverlust führt.

Die dem Ultraschallwandler 8 zugewandte Fläche 12 des Körpers 11 ist derart ausgerichtet, dass vom Ultraschallwandler 8 abgestrahlte und an der Fläche 12 reflektierte Ultraschallwellen nicht mehr auf den Ultraschallwandler 8 auftreffen. Es hat sich gezeigt, dass diese Anforderung erfüllt ist, wenn die Fläche 12 annähernd parallel zur Oberfläche 13 des Ultraschallwandlers 8, d.h. annähernd senkrecht zur axialen Richtung 7 ausgestaltet ist.

Der Verdrängungskörper 14 mit dem integrierten Körper 11 ist vorzugsweise derart ausgebildet, dass er in einem Duchflussmesser 1 mit dem Messrohr 6 oder in einem Duchflussmesser 1 ohne Messrohr 6 eingesetzt werden kann. Somit lassen sich z.B. ein für einen Nenndurchfluss von 0.6 m³/h und ein für einen Nenndurchfluss von 1.5 m³/h ausgelegter Duchflussmesser 1 realisieren, die sich nur darin unterscheiden, ob das Messrohr 6 eingesetzt ist oder nicht.

Die Fig. 4 zeigt eine Lösung, bei der der Ultraschallwandler 8 (und auch der Ultraschallwandler 9) seitlich mittels eines Flansches am Gehäuse 2 des Durchflussmessers 1 angebracht ist. Zur Umlenkung der vom Ultraschallwandler 8 abgestrahlten Ultraschallimpulse dient ein Spiegel 17 aus nichtrostendem Stahl. Der Spiegel 17 ist von einem Kunststoffträger 18 gehalten. Bei der Montage wird der Kunststoffträger 18 seitlich in den Einlassstutzen 3 eingeführt, wobei mindestens zwei Rastnasen des Kunststoffträgers 18 in eine umlaufende Nut 19 des Gehäuses 2 einschnappen. Der Kunststoffträger 18 weist weiter ein oder zwei Zapfen 20 auf, die in derart gestaltete Ausnehmungen des Gehäuses 2 eingreifen, dass die Lage des Spiegels 17 eindeutig und unverrückbar ist. Der Kunststoffträger 18 begrenzt gegebenenfalls die axiale Lagerung des Messrohres 6, das seinerseits mit einem O-Ring im Gehäuse 2 abgedichtet ist. Der Körper 11 zur Verkleidung der Stufe 10 ist Teil des Kunststoffträgers 18. Der Kunststoffträger 18 verkleidet mit Vorteil den gesamten Innenraum des Einlass- oder Auslassstutzens 3 bzw. 4. Diese Ausbildung des Gehäuses 2 und des Kunststoffträgers 18 bietet die Vorteile, dass das Gehäuse 2 auf kostengünstige Weise aus Pressmessing hergestellt werden kann und dass der Kunststoffträger 18 problemlos alle Stellen des Gehäuses 2, an denen unerwünschte Reflexionen des Ultraschalls entstehen könnten, mit ultraschallabsorbierendem Material verkleidet. Der Kunststoffträger 18 dient auch als Verdrängungskörper zur Minimierung des Strömungswiderstandes.

Der Kunststoffträger 18 mit dem integrierten Körper 11 ist auch hier vorzugsweise derart ausgebildet, dass er in einem Duchflussmesser 1 mit einem Messrohr 6 oder in einem Duchflussmesser 1 ohne Messrohr 6 eingesetzt werden kann. Somit lassen sich z.B. ein für einen Nenndurchfluss von 0.6 m³/h und ein für einen Nenndurchfluss von 1.5 m³/h ausgelegter Duchflussmesser 1 realisieren, die sich nur darin unterscheiden, ob das Messrohr 6 eingesetzt ist oder nicht. Die Nasen 15 und die Führungselemente 16 (Fig. 2) sind vorzugsweise übereinander angeordnet (nicht nebeneinander wie dargestellt) und so klein bemessen, dass sie auch beim Duchflussmesser 1 ohne Messrohr 6 nicht zum Druckverlust beitragen.

## Patentansprüche

1. Durchflussmesser (1) mit einem Gehäuse (2) mit einem Einlassstutzen (3) und einem Auslassstutzen (4), zwischen denen eine von einem Medium in einer axialen Richtung (7) durchströmte Ultraschallmessstrecke gebildet ist, wobei im Einlassstutzen (3) und im Auslassstutzen (4) je ein Ultraschallwandler (8 bzw. 9) oder ein von einem Ultraschallwandler (8 bzw. 9) beschallter Spiegel (17) zur Beschallung der Ultraschallmessstrecke angeordnet ist, **dadurch gekennzeichnet, dass** das Gehäuse (2) beim Übergang vom Einlass- bzw. Auslassstutzen zur Ultraschallmessstrecke inwendig mit einem Körper (11) aus ultraschallabsorbierenden Material verkleidet ist, der eine dem entsprechenden Ultraschallwandler (8 bzw. 9) zugewandte Fläche (12) aufweist, die im wesentlichen senkrecht zur axialen Richtung (7) ausgebildet ist.

2. Durchflussmesser (1) nach Anspruch 1, **dadurch gekennzeichnet, dass** die Ultraschallwandler (8 bzw. 9) bzw. die Spiegel (17) mit einem Verdrängungskörper (14) versehen sind und dass der Verdrängungskörper (14) und der Körper (11) als ein Teil gebildet sind.

3. Durchflussmesser nach Anspruch 1 oder 2, **dadurch gekennzeichnet, dass** der Körper (11) aus PVDF besteht.

## Claims

1. Flowmeter (1) with a case (2) containing an inlet connection (3) and an outlet connection (4), between which is formed an ultrasonic measurement section, through which a medium flows in an axial direction, the inlet connection (3) and the outlet connection (4) each containing an ultrasonic transducer (8 or 9) or a reflector (17) irradiated by an ultrasonic transducer (8 or 9) for the purpose of irradiating the ultrasonic measurement section, **characterised in that**, at the transition from the inlet or outlet connection to the ultrasonic measurement section, the case (2) is covered internally by a member (11) of ultrasound-absorbent material having a surface (12) facing the corresponding ultrasonic transducer (8 or 9), which surface is substantially perpendicular to the axial direction (7).

2. Flowmeter (1) according to claim 1, **characterised in that** the ultrasonic transducers (8 and 9) or the reflectors (17) are provided with a displacement body (14), and **in that** the displacement body (14) and the member (11) are constructed as one piece.

3. Flowmeter according to claim 1 or 2, **characterised in that** the member (11) is composed of PVDF.

## Revendications

1. Débitmètre (1) comportant un boîtier (2) avec une tubulure d'admission (3) et une tubulure de sortie (4), entre lesquelles est formé un trajet de mesure par ultrasons, qui est traversé par un fluide circulant dans une direction axiale (7), sachant que dans la tubulure d'admission (3) et la tubulure de sortie (4) est monté respectivement un transducteur d'ultrasons (8 et 9) ou un miroir (17) exposé à l'action des ultrasons d'un transducteur d'ultrasons (8 et 9) en vue d'une irradiation ultrasonore du trajet de mesure par ultrasons, **caractérisé en ce que** le boîtier (2), dans la zone de transition entre la tubulure d'admission et le trajet de mesure des ultrasons et la tubulure de sortie et le trajet de mesure des ultrasons, est revêtu à l'intérieur avec un corps (11) réalisé dans un matériau absorbant les ultrasons, lequel comporte une surface (12), qui est orientée vers le transducteur d'ultrasons (8 ou 9) correspondant et qui est sensiblement perpendiculaire à la direction axiale (7).

2. Débitmètre (1) selon la revendication 1, **caractérisé en ce que** les transducteurs d'ultrasons (8 et 9) et les miroirs (17) sont munis d'un corps de refoulement (14) et **en ce que** le corps de refoulement (14) et le corps (11) sont réalisés d'un seul tenant.

3. Débitmètre selon la revendication 1 ou 2, **caractérisé en ce que** le corps (11) est réalisé en polyvinylidènefluorure (PVDF).
